# FASCICULE DE BREVET EUROPEEN

(11) **EP 3 325 345 B1**
(45) Date de publication et mention de la délivrance du brevet: **15.01.2020**
(21) Numéro de dépôt: 16757290.8
(22) Date de dépôt: 21.07.2016
(51) Int. Cl.: B64D 35/06, B64D 27/14, B64D 33/04, F01D 13/00

(54) **AERONEF AVEC UN ENSEMBLE PROPULSIF COMPRENANT UNE SOUFFLANTE A L'ARRIERE DU FUSELAGE**
FLUGZEUG MIT EINER ANTRIEBSANORDNUNG MIT EINEM GEBLÄSE AM HINTEREN TEIL DES RUMPFES
AIRCRAFT COMPRISING A PROPULSION ASSEMBLY INCLUDING A FAN ON THE REAR OF THE FUSELAGE

(30) Priorité: 22.07.2015 FR 1556952
(43) Date de publication de la demande: 30.05.2018
(73) Titulaire: Safran Aircraft Engines, 75015 Paris (FR)
(72) Inventeur: TANTOT, Nicolas, Jérôme, Jean, 77550 Moissy-Cramayel Cedex (FR)
(74) Mandataire: Gevers & Orès
(86) Numéro de dépôt international: PCT/FR2016/051885
(87) Numéro de publication internationale: WO 2017/013363

(56) Documents cités:
- EP-A1- 1 267 064
- FR-A- 1 443 200
- FR-A1- 2 997 681
- US-A- 3 060 685
- US-A- 3 099 425
- US-A- 3 366 350

## Description

### Domaine de l'invention

La présente invention concerne le domaine aéronautique dans lequel les aéronefs sont propulsés par un ensemble de rotors de soufflantes disposés à l'arrière dans le prolongement du fuselage. Les rotors de soufflantes sont entraînés par des turbines libres, contrarotatives, alimentées par des générateurs de gaz formés de turboréacteurs.

### Etat de la technique

Il a été proposé dans la demande de brevet FR-A1-2 997 681, une nouvelle architecture d'aéronef permettant de réduire les nuisances sonores et la consommation de carburant de l'aéronef en limitant la traînée aérodynamique.

Dans une telle architecture, un aéronef est propulsé par un système de propulsion à soufflantes contrarotatives, intégré à l'arrière du fuselage de l'aéronef, dans le prolongement de celui-ci. Le système de propulsion comprenant au moins deux générateurs de gaz qui alimentent une turbine de puissance ayant deux rotors contrarotatifs pour entraîner deux rotors de soufflantes, les soufflantes étant disposées en aval des générateurs de gaz, et partiellement alimentées par la couche limite développée au voisinage du fuselage de l'avion. Les générateurs de gaz sont des moteurs à turbine à gaz incorporés au fuselage avec des entrées d'air distinctes qui alimentent chacune un générateur de gaz. Lesdites entrées d'air sont disposées latéralement par rapport au fuselage de l'aéronef, et absorbent une partie au moins de la couche limite formée autour du fuselage. Le diamètre de la nacelle enveloppant les rotors de soufflantes est, selon cette réalisation, sensiblement égal à celui de la plus grande section du fuselage de l'aéronef. Cette nacelle intègre la turbine de puissance.

Dans une telle solution, en cas de défaillance de la partie du système de propulsion composée de la turbine contrarotative et des soufflantes contrarotatives, le maintien de la capacité à générer de la poussée peut ne pas être assuré. Par exemple, en cas de destruction des aubages de la turbine contrarotative, une obstruction totale du flux interne chaud par les débris peut se produire, Il s'ensuivrait la perte totale de poussée ainsi qu'une probabilité de pompage élevée des générateurs de gaz en raison de la brutale variation de section débitante.

Il est également connu du document US 3 366 350 un aéronef équipé d'une soufflante alimentée par les gaz de deux générateurs de gaz en cas d'avarie de la soufflante. La soufflante est disposée dans une enveloppe qui est agencée à l'arrière du fuselage et de manière séparée. Les deux générateurs de gaz sont installés chacun dans un carénage dont au moins une partie est intégrée à l'enveloppe de la soufflante. Les deux générateurs de gaz alimentent chacun une portion des aubes de turbine situées en périphérie de la soufflante.

Par ailleurs, le mode d'installation des générateurs de gaz totalement intégrés au fuselage suppose un agencement des entrées d'air permettant de ne pas alimenter les générateurs avec la couche limite développée sur le fuselage avion ; cette dernière présentant une vitesse sensiblement inférieure à la vitesse de vol, est préjudiciable au rendement thermique des générateurs de gaz.

La présente invention a pour objet de fournir une solution adaptée au type d'architecture d'aéronef et de propulseur qui vient d'être décrit pour que l'ensemble fonctionne de manière optimale indépendamment des différentes conditions de vol.

Ainsi, plus particulièrement, un objectif est d'alimenter les générateurs de gaz sans ingestion de couche limite fuselage ni de distorsion de flux, pour en maximiser le rendement thermique, Il s'agit aussi de maintenir la capacité à alimenter le propulseur avec le maximum d'air issu de la couche limite afin d'en maximiser le rendement propulsif.

La présente invention a également pour objectif de maintenir une capacité de poussée en cas de défaillance majeure du module propulseur.

La présente invention a également comme objectif, en cas de défaillance du propulseur, d'assurer la ségrégation des flux entre les parties fonctionnelles du système propulsif et les parties qui ne sont plus fonctionnelles.

La présente invention a également comme objectif de mettre en œuvre une installation des générateurs de gaz compatible avec les exigences de certification, notamment vis-à-vis des risques de « cross-débris ». Par ce terme on désigne l'endommagement de l'un des générateurs de gaz par les débris provenant de l'autre générateur.

### Exposé de l'invention

On atteint ces objectifs avec un aéronef comportant un fuselage et un propulseur monté à l'arrière du fuselage de l'aéronef, sur la partie arrière du fuselage, le propulseur comprenant une turbine de puissance à l'intérieur d'une veine de flux primaire et au moins une soufflante à l'intérieur d'une veine de flux secondaire et entraînée mécaniquement par la turbine de puissance, la veine de flux primaire et la veine de flux secondaire étant concentriques, la turbine de puissance étant alimentée en gaz issus de deux générateurs de gaz à turbine à gaz par deux canaux d'alimentation, les dits générateurs de gaz étant d'axes parallèles à celui du fuselage, espacés du fuselage et les canaux d'alimentation présentant chacun une trappe de commande du flux, mobile entre une position de guidage du flux gazeux vers la turbine de puissance et une position d'éjection des gaz issus du générateur de gaz dans l'atmosphère en contournant la turbine de puissance, position dans laquelle la trappe est configurée pour obturer le canal d'alimentation respectif, les trappes formant des éléments de la paroi des canaux d'alimentation, la turbine de puissance comportant deux rotors coaxiaux et contrarotatifs entraînant chacun un rotor de soufflante contrarotative, et les deux canaux d'alimentation convergeant en amont de la turbine de puissance en un unique conduit d'entrée.

Cette solution assure le positionnement des générateurs de gaz de manière suffisamment éloignée du fuselage pour que leurs manches d'entrées d'air soient écartées du fuselage et qu'ils n'ingèrent pas cette couche limite, pénalisante sur le plan du rendement thermique de la turbomachine, en particulier, du rendement propulsif. D'autre part, l'agencement proposé par l'invention de part et d'autre du fuselage par rapport à son axe longitudinal limite le risque de « cross débris ».

Cette configuration permet également un mélange des flux gazeux chauds issus des deux générateurs de gaz qui s'effectue en amont de la turbine de puissance avant d'alimenter la turbine de puissance. Ce mélange préalable est un facteur d'homogénéisation circonférentielle de l'écoulement permettant d'assurer un fonctionnement de la turbine de puissance avec des conditions aérodynamiques similaires à celles de turbines conventionnelles. Cela permet donc une amélioration du rendement de la turbine de puissance et de sa durée de vie.

Il est à noter que cette solution se distingue de celle présentée dans le brevet EP 1 267 064 au nom du présent déposant qui porte sur un moteur à configuration variable fonctionnant de manière nominale alternativement en subsonique et en supersonique, là où l'invention a pour but de fournir un dispositif palliatif en cas de panne du propulseur principal situé dans la pointe arrière de l'avion. L'architecture d'un aéronef supersonique n'est pas concernée au premier ordre par une problématique d'optimisation du rendement des générateurs de gaz, vis-à-vis de l'ingestion de la couche limite ingérée développée sur le fuselage. En particulier, l'architecture de cette turbomachine a essentiellement pour vocation d'introduire la possibilité de faire varier le taux de dilution global de la motorisation par activation lors de phases de vol croisière d'une soufflante auxiliaire, entraînée par une turbine alimentée en partie des gaz éjectés par les deux générateurs de gaz. un tel concept n'a aucun lien avec la notion d'ingestion de couche limite sur un aéronef. Elle ne permet pas non plus une homogénéisation des gaz chauds avant l'alimentation de la turbine.

De préférence, au moins deux générateurs de gaz sont espacés de toute voilure de l'aéronef.

En particulier, les générateurs de gaz sont montés respectivement sur le fuselage par l'intermédiaire de pylônes qui créent un espace entre une paroi du fuselage et la manche d'entrée d'air de chacun des générateurs de gaz de manière que leurs manches d'entrées d'air n'ingèrent pas la couche limite.

De manière encore plus préférentielle, les deux générateurs de gaz sont masqués l'un par rapport à l'autre par le fuselage de l'avion.

ici le risque de « cross débris » est encore diminué en raison de la présence du fuselage entre les deux générateurs de gaz.

selon une autre caractéristique de l'invention, le rayon moyen de la turbine de puissance est inférieur au rayon moyen de la soufflante.

suivant une autre caractéristique de l'invention, le conduit d'entrée en amont de la turbine de puissance présente une section circulaire. Une telle configuration permet également une alimentation circonférentielle et homogène de la turbine de puissance soit sur 360°. En particulier, elle participe à l'amélioration du rendement de la turbine de puissance.

Avantageusement, les canaux d'alimentation comportent des moyens d'éjection des gaz dans l'atmosphère qui forment des éléments de paroi desdits canaux d'alimentation lorsque les trappes sont positionnées pour guider le flux gazeux vers la turbine de puissance.

En effet, la propulsion de l'aéronef est optimisée pour faire fonctionner le propulseur en aval des générateurs de gaz. Leur intégration dans la paroi des canaux d'alimentation permet de minimiser les perturbations de l'écoulement extérieur lors de ce fonctionnement.

Plus particulièrement la trappe de commande du flux d'air issu de chaque générateur de gaz comprend un élément de paroi mobile entre une position d'obturation du canal d'alimentation et d'ouverture d'éjection du flux parallèlement à l'axe du fuselage, et une position de guidage du flux dans le canal d'alimentation.

Avantageusement, les générateurs de gaz sont des turboréacteurs mono-flux et plus particulièrement les turboréacteurs sont à double corps.

Notamment le canal d'éjection issu des turboréacteurs est convergent. Ainsi dans l'invention, l'éjection des gaz chauds dans le cas de la panne propulseur principal (considérée comme un mode de secours) est réalisée au travers d'une grille de type inverseur de poussée, dont la section de passage est rendue légèrement convergente, faisant ainsi office de tuyère simplifiée et générant une poussée dans l'axe de l'avion.

En particulier, en cas de défaillance totale des deux rotors de soufflante, les générateurs de gaz continuent à générer une poussée en mode dégradée via l'éjection par une tuyère.

### Présentation des figures

L'invention sera mieux comprise, et d'autres buts, détails, caractéristiques et avantages de celle-ci apparaîtront plus clairement à la lecture de la description explicative détaillée qui va suivre, d'un mode de réalisation de l'invention donné à titre d'exemple purement illustratif et non limitatif, en référence au dessin schématique annexé. Sur ces dessins :
La figure 1 est une représentation schématique d'un ensemble propulsif selon l'invention ; la moitié supérieure montre la trappe en position de fonctionnement normal du moteur, la moitié inférieure montre la trappe en position d'obturation du canal d'alimentation de la turbine.
La figure 2 présente l'installation de l'ensemble propulsif de la figure 1 sur un aéronef selon l'invention.

Description détaillée d'un mode de réalisation de l'invention.

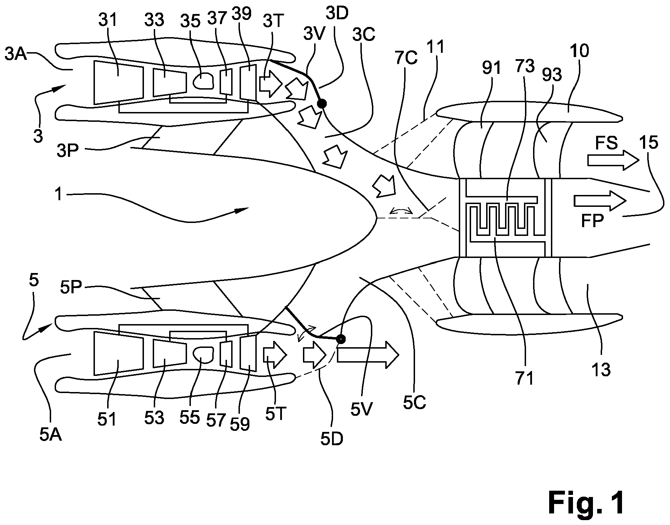

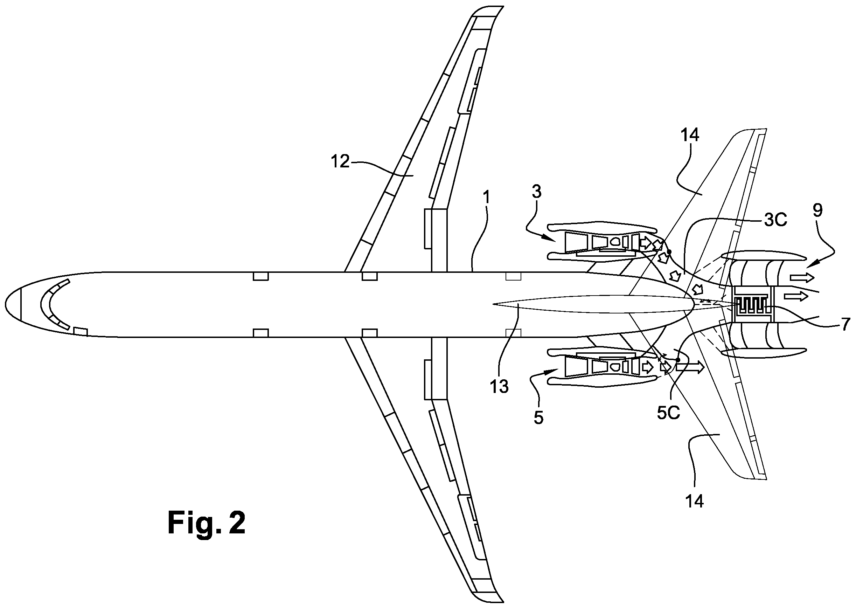

En référence aux figures 1 et 2, l'ensemble propulsif est monté à l'arrière de l'aéronef, sur la partie arrière du fuselage 1. Sur ce fuselage sont montés les deux générateurs 3 et 5 de gaz respectivement suivant un axe parallèle à celui du fuselage. Chaque générateur de gaz 3, 5 est monté sur le fuselage avec un espace entre le fuselage et les générateurs de gaz. Cet espace permet d'éviter l'ingestion de l'air de la couche limite formée le long de la paroi du fuselage. Chaque générateur de gaz 3, 5 comprend une manche d'entrée d'air. Dans le présent exemple, chaque générateur de gaz 3, 5 est monté respectivement sur le fuselage par l'intermédiaire de pylônes 3p et 5p. Ces deux pylônes permettent de réserver un espace suffisant entre la paroi du fuselage et la manche d'entrée d'air de chacun des moteurs, 3a et 5a évitant ainsi que l'air de la couche limite ne soit dirigé vers les manches d'entrée d'air des générateurs de gaz, tout en alimentant les soufflantes 91 et 93 du propulseur.

Comme on peut le voir sur la figure 2, le positionnement des pylônes 3p et 5p, ici de manière latérale à l'arrière du fuselage 1, éloigne les générateurs 3 et 5 à la fois des ailes 12, situées sensiblement dans la partie médiane du fuselage, et de l'empennage arrière, formé ici d'une dérive verticale 13 supportant deux ailerons 14. Plus précisément, les générateurs de gaz sont à la hauteur du fuselage disposé latéralement et les ailerons sont verticalement à distance du fuselage. De plus, les deux générateurs 3, 5 sont ici installés en amont de la queue du fuselage 1, dans une région où le diamètre du fuselage permet à ce dernier de masquer chaque générateur par rapport à l'autre et les ailerons sont à distances des turbines des générateurs de gaz pour éviter qu'un éclatement de disque de turbine ne crée des dommages sur l'autre générateur de gaz ou les ailerons.

Les générateurs de gaz sont, dans l'exemple illustré ici, des turboréacteurs mono-flux à double corps. Ils comprennent ainsi un corps basse pression formé d'un rotor avec un compresseur 31 ; 51 et une turbine 39 ; 59, et d'un rotor haute pression formé d'un compresseur 33 ; 53 et d'une turbine 37 ; 57. Les compresseurs alimentent en air une chambre de combustion 35 ; 55 dont les gaz produits entraînent les turbines haute pression et basse pression successivement. Les gaz sont guidés vers les canaux d'échappement 3T et 5T immédiatement en aval des turbines. Ces canaux sont prolongés par des conduits 3C et 5C qui convergent vers un unique conduit d'entrée 7C du propulseur situé en aval du fuselage.

L'espace suffisant entre l'axe du fuselage et l'axe du générateur de gaz peut être compris entre 0.5 et 1.5 fois le diamètre du compresseur.

Le propulseur comprend une turbine 7 de puissance située dans l'axe de rotation du propulseur ou à proximité de celui-ci. Comme cela est visible sur les figures 1 et 2, l'axe de rotation du propulseur est sensiblement coaxial à l'axe du fuselage. La turbine 7 de puissance est formée de deux rotors de turbines coaxiaux et contrarotatifs, 71 et 73, dans l'axe du fuselage. La veine de gaz entraînant la turbine contrarotative constitue la veine de flux primaire. Chaque rotor de turbine est solidaire mécaniquement d'un rotor extérieur de soufflante concentrique, 91 respectivement 93. La soufflante contrarotative 9 tourne à l'intérieur du carter de soufflante 10 qui est relié par des bras 11 au fuselage 1 et qui définit la veine de flux secondaire.

Des trappes 3v et 5v sont disposées en aval des canaux d'échappement 3T et 5T des deux générateurs de gaz 3 et 5. Elles peuvent pivoter autour d'un axe situé en aval par rapport au canal d'échappement respectif. Ces trappes forment des éléments de la paroi de guidage du flux gazeux issu du canal d'échappement 3T et 5T. En d'autres termes, ces trappes forment des éléments de la paroi des canaux d'alimentation 3C, 5C.

En fonctionnement normal, les gaz issus des canaux d'échappement sont guidés dans les conduits 3C et 5C d'alimentation du propulseur. Les deux flux convergent vers l'unique conduit d'entrée du propulseur. Comme cela est visible sur la figure 1, le conduit d'entrée est agencé en amont des soufflantes. En particulier, le conduit d'entrée 7 est localisé en amont de la turbine de puissance 7. Les flux de gaz chauds sont mélangés en amont de la turbine de puissance qui permet une homogénéisation du flux sur l'ensemble de la turbine de puissance pour son alimentation. Le conduit d'entrée 7 présente une section circulaire qui participe également à une alimentation homogène des rotors de turbines. Les flux constituent le flux primaire qui met en mouvement de rotation la turbine contrarotative 7 avant d'être éjecté dans l'atmosphère à travers la tuyère de flux primaire 15. Les deux rotors de turbine 71 et 73 entraînent en rotation chacun les deux rotors 91, 93 de la soufflante 9 contrarotative. Ces derniers aspirent l'air extérieur dans le volume défini par le carter de soufflante et la carène de la veine primaire. L'air traversant la soufflante constitue le flux secondaire.

Par ailleurs, en fonctionnement normal, chaque trappe 3v, 5v est positionnée de manière à s'intégrer dans le prolongement de la paroi, entre le canal d'échappement 3T, 5T et le canal d'admission 3C, 5C. De cette manière, l'écoulement extérieur à l'aéronef et aux générateurs de gaz est le moins perturbé possible.

Lorsqu'une panne intervient sur le propulseur avec un risque d'obstruction de la veine du flux primaire, ce qui engendrerait une perte totale de propulsion, il est possible avec l'agencement de l'invention d'assurer la propulsion de l'aéronef directement par les gaz issus des générateurs de gaz 3 et 5. Les trappes 3v et 5v sont pivotées autour de leur axe de rotation de manière à obturer les canaux vers les conduits 3C et 5C d'alimentation du propulseur. En pivotant, les trappes 3v et 5v découvrent une partie, 3D ; 5D, de la paroi dans l'axe du canal d'échappement 3T et 5T associé, formant ainsi un moyen d'échappement des gaz de chaque générateur de gaz vers l'atmosphère. Ainsi la continuité de la propulsion est assurée.

## Revendications

1. Aéronef comportant un fuselage (1) et un propulseur monté à l'arrière du fuselage de l'aéronef, sur la partie arrière du fuselage, le propulseur comprenant une turbine (7) de puissance à l'intérieur d'une veine de flux primaire et au moins une soufflante (9) à l'intérieur d'une veine de flux secondaire et entraînée mécaniquement par la turbine de puissance, la veine de flux primaire de la turbine de puissance et la veine de flux secondaire de la soufflante étant concentriques, la turbine de puissance étant alimentée en gaz issus d'au moins deux générateurs de gaz (3, 5) à turbine à gaz par au moins deux canaux d'alimentation, la turbine (7) de puissance comportant deux rotors coaxiaux et contrarotatifs (71, 73) entraînant chacun un rotor de soufflante (91, 93) contrarotative, les deux canaux d'alimentation (3C, 5C) convergeant en amont de la turbine de puissance en un unique conduit d'entrée (7C), **caractérisé par le fait que** les dits générateurs à turbine à gaz étant d'axes parallèles à celui du fuselage, espacés du fuselage, et les canaux d'alimentation (3C, 5C) présentant chacun une trappe (3v, 5v) de commande du flux, mobile entre une position de guidage du flux gazeux vers la turbine de puissance et une position d'éjection des gaz dans l'atmosphère en contournant la turbine de puissance, position dans laquelle la trappe est configurée pour obturer le canal d'alimentation respectif, lesdites trappes formant des éléments de la paroi des canaux d'alimentation (3C, 5C).

2. Aéronef selon la revendication 1, **caractérisé en ce que** lesdits générateurs de gaz sont montés respectivement sur le fuselage par l'intermédiaire de pylônes qui créent un espace entre une paroi du fuselage et la manche d'entrée d'air de chacun des générateurs de gaz (3, 5).

3. Aéronef selon la revendication 1 ou 2, **caractérisé en ce que** les deux générateurs de gaz sont espacés de toute voilure (12, 14) de l'aéronef.

4. Aéronef selon l'une des revendications 1 à 3, **caractérisé en ce que** les deux générateurs de gaz (3, 5) sont masqués l'un par rapport à l'autre par le fuselage (1) de l'avion.

5. Aéronef selon l'une des revendications précédentes, **caractérisé en ce que** les canaux d'alimentation (3C, 5C) comportent des moyens d'éjection des gaz dans l'atmosphère qui forment des éléments de paroi desdits canaux d'éjection lorsque les trappes (3v, 5v) sont positionnées pour guider le flux gazeux vers la turbine de puissance (7).

6. Aéronef selon la revendication précédente, **caractérisé en ce que** la trappe (3V, 5v) de commande du flux comprend un élément de paroi mobile entre une position d'obturation du canal d'alimentation et d'ouverture d'éjection du flux parallèlement à l'axe du fuselage et une position de guidage du flux dans le canal d'alimentation.

7. Aéronef selon l'une des revendications précédentes, **caractérisé en ce que** les générateurs de gaz sont des turboréacteurs mono-flux.

8. Aéronef selon la revendication précédente, **caractérisé en ce que** les turboréacteurs sont à double corps.

9. Aéronef selon la revendication précédente, **caractérisé en ce que** le canal d'alimentation issu des turboréacteurs est convergent.

10. Aéronef selon l'une quelconque des revendications précédentes, **caractérisé en ce que** l'unique conduit d'entrée (7C) est agencé en amont des soufflantes (9).

11. Aéronef selon l'une quelconque des revendications précédentes, **caractérisé en ce que** le conduit d'entrée (7C) en amont de la turbine de puissance présente une section circulaire.

12. Aéronef selon l'une quelconque des revendications précédentes, **caractérisé en ce que** le propulseur est coaxial avec l'axe du fuselage et est agencé dans le prolongement du fuselage.

13. Aéronef selon l'une quelconque des revendications précédentes, **caractérisé en ce que** la turbine de puissance (7) est située dans l'axe du fuselage.

## Patentansprüche

1. Luftfahrzeug mit einem Rumpf (1) und einem Triebwerk, das an der Rückseite des Rumpfs des Luftfahrzeugs auf dem hinteren Teil des Rumpfs montiert ist, wobei das Triebwerk eine Leistungsturbine (7) im Inneren eines Primärstromkanals und mindestens ein Gebläse (9) im Inneren eines Sekundärstromkanals umfasst, und die mechanisch von der Leistungsturbine angetrieben ist, wobei der Primärstromkanal der Leistungsturbine und der Sekundärstromkanal des Gebläses konzentrisch sind, wobei die Leistungsturbine mit Gasen versorgt ist, die aus mindestens zwei Gasgeneratoren (3, 5) mit Gasturbine durch mindestens zwei Versorgungskanäle hervorgehen, wobei die Leistungsturbine (7) zwei koaxiale und entgegengesetzt drehende Rotoren (71, 73) umfasst, die jeweils einen entgegengesetzt drehenden Gebläserotor (91, 93) antreiben, wobei die zwei Versorgungskanäle (3C, 5C) stromaufwärts der Leistungsturbine in eine einzige Einlassleitung (7C) konvergieren, **dadurch gekennzeichnet, dass** die Generatoren mit Gasturbine mit Achsen parallel zu derjenigen des Rumpfs versehen sind, die vom Rumpf beabstandet sind, und die Versorgungskanäle (3C, 5C) jeweils eine Steuerklappe (3V, 5V) des Stroms aufweisen, die zwischen einer Führungsposition des gasförmigen Stroms zur Leistungsturbine und einer Ausstoßposition der Gase in die Umgebung unter Umgehen der Leistungsturbine beweglich ist, wobei die Klappe in dieser Position konfiguriert ist, um den jeweiligen Versorgungskanal zu verschließen, wobei die Klappen Elemente der Wand der Versorgungskanäle (3C, 5C) bilden.

2. Luftfahrzeug nach Anspruch 1, **dadurch gekennzeichnet, dass** die Gasgeneratoren jeweils auf den Rumpf über Masten montiert sind, die einen Raum zwischen einer Wand des Rumpfs und dem Lufteinlassstutzen jedes der Gasgeneratoren (3, 5) bilden.

3. Luftfahrzeug nach Anspruch 1 oder 2, **dadurch gekennzeichnet, dass** die zwei Gasgeneratoren von jeglicher Tragfläche (12, 14) des Luftfahrzeugs beabstandet sind.

4. Luftfahrzeug nach einem der Ansprüche 1 bis 3, **dadurch gekennzeichnet, dass** die zwei Gasgeneratoren (3, 5) voneinander durch den Rumpf (1) des Flugzeugs maskiert sind.

5. Luftfahrzeug nach einem der vorstehenden Ansprüche, **dadurch gekennzeichnet, dass** die Versorgungskanäle (3C, 5C) Mittel zum Ausstoßen der Gase in die Umgebung umfassen, die Elemente der Wand der Ausstoßkanäle bilden, wenn die Klappen (3V, 5V) positioniert sind, um den gasförmigen Strom zur Leistungsturbine (7) zu leiten.

6. Luftfahrzeug nach dem vorstehenden Anspruch, **dadurch gekennzeichnet, dass** die Steuerklappe (3V, 5V) des Flusses ein Wandelement umfasst, das zwischen einer Schließposition des Versorgungskanals und Öffnungs-Ausstoßposition des Stroms parallel zur Achse des Rumpfs und einer Leitungsposition des Stroms im Versorgungskanal beweglich ist..

7. Luftfahrzeug nach einem der vorstehenden Ansprüche, **dadurch gekennzeichnet, dass** die Gasgeneratoren einflutige Turboluftstrahltriebwerke sind.

8. Luftfahrzeug nach dem vorstehenden Anspruch, **dadurch gekennzeichnet, dass** die Turboluftstrahltriebwerke Doppelkörper aufweisen.

9. Luftfahrzeug nach dem vorstehenden Anspruch, **dadurch gekennzeichnet, dass** der Versorgungskanal, der aus den Turboluftstrahltriebwerken austritt, konvergierend ist.

10. Luftfahrzeug nach einem der vorstehenden Ansprüche, **dadurch gekennzeichnet, dass** die einzige Einlassleitung (7C) stromaufwärts der Gebläse (9) eingerichtet ist.

11. Luftfahrzeug nach einem der vorstehenden Ansprüche, **dadurch gekennzeichnet, dass** die Einlassleitung (7C) stromaufwärts der Leistungsturbine einen kreisförmigen Querschnitt aufweist.

12. Luftfahrzeug nach einem der vorstehenden Ansprüche, **dadurch gekennzeichnet, dass** das Triebwerk zu der Achse des Rumpfs koaxial und in der Verlängerung des Rumpfs eingerichtet ist.

13. Luftfahrzeug nach einem der vorstehenden Ansprüche, **dadurch gekennzeichnet, dass** die Leistungsturbine (7) in der Achse des Rumpfs liegt.

## Claims

1. Aircraft comprising a fuselage (1) and a thruster mounted at the rear of the fuselage of the aircraft, on the rear portion of the fuselage, the thruster comprising a power turbine (7) inside a primary flow duct and at least one fan (9) inside a secondary flow duct and driven mechanically by the power turbine, the primary flow duct of the power turbine and the secondary flow duct of the fan being concentric, the power turbine being supplied with gas coming from at least two turbine gas generators (3, 5) by at least two supply channels, the power turbine (7) comprising two coaxial and contrarotating rotors (71, 73) each driving a contrarotating fan rotor (91, 93), the two supply channels (3C, 5C) converging upstream from the power turbine in one single inlet conduit (7C), **characterised by** the fact that said gas turbine generators being of axes parallel to that of the fuselage, spaced from the fuselage, and the supply channels (3C, 5C), each having a trap (3V, 5V) for controlling the flow, mobile between a position for guiding the gaseous flow towards the power turbine and a position for ejecting gases into the atmosphere by bypassing the power turbine, position wherein the trap is configured to close the respective supply channel, said traps forming elements of the wall of the supply channels (3C, 5C).

2. Aircraft according to claim 1, **characterised in that** said gas generators are mounted respectively on the fuselage by way of pylons which create a space between a wall of the fuselage and the air inlet sleeve of each of the gas generators (3, 5).

3. Aircraft according to claim 1 or 2, **characterised in that** the two gas generators are spaced from any aerofoil (12, 14) of the aircraft.

4. Aircraft according to one of claims 1 to 3, **characterised in that** the two gas generators (3, 5) are masked against one another by the fuselage (1) of the aeroplane.

5. Aircraft according to one of the preceding claims, **characterised in that** the supply channels (3C, 5C) comprise ejecting means for ejecting gases in the atmosphere which form wall elements of said ejection channels when the traps (3V, 5V) are positioned to guide the gaseous flow towards the power turbine (7).

6. Aircraft according to the preceding claim, **characterised in that** the trap (3V, 5V) for controlling the flow comprises a wall element, mobile between a position for closing the supply channel and for opening of ejection of the flow parallel to the axis of the fuselage and a position for guiding the flow into the supply channel.

7. Aircraft according to one of the preceding claims, **characterised in that** the gas generators are single-flow turbojet engines.

8. Aircraft according to the preceding claim, **characterised in that** the turbojets are two-spool turbojet engines.

9. Aircraft according to the preceding claim, **characterised in that** the supply channel coming from the turbojet engines is convergent.

10. Aircraft according to any one of the preceding claims, **characterised in that** the single inlet conduit (7C) is arranged upstream the fans (9).

11. Aircraft according to any one of the preceding claims, **characterised in that** the inlet conduit (7C) upstream the power turbine has a circular cross-section.

12. Aircraft according to any one of the preceding claims, **characterised in that** the thruster is coaxial with the axis of the fuselage and is arranged in the extension of the fuselage.

13. Aircraft according to any one of the preceding claims, **characterised in that** the power turbine (7) is situated along the axis of the fuselage.
